# EUROPEAN PATENT APPLICATION

(11) **EP 2 492 942 A1**
(43) Date of publication of application: **29.08.2012**
(21) Application number: 10835732.8
(22) Date of filing: 27.05.2010
(51) Int. Cl.: H01H 50/56, B62D 6/00

(54) **ELECTRIC POWER STEERING DEVICE**

(30) Priority: 10.12.2009 JP 2009280896
(71) Applicant: Showa Corporation, Gyoda-shi, Saitama 361-8506 (JP)
(72) Inventor: TAKEUCHI, Yoshinori, Haga-gun Tochigi 321-3325 (JP); ISHIKAWA, Fumiaki, Haga-gun Tochigi 321-3325 (JP)
(74) Representative: Style, Kelda Camilla Karen
(86) International application number: PCT/JP2010/059009
(87) International publication number: WO 2011/070809

(57) **Abstract**

In an electric power steering apparatus, a switch means (40) is provided with a shutoff means (70) which extends from one to another of at least two fixed contact points so as to shut off an extension of a foreign material which allows an electrical continuity of the fixed contact points, between the at least two fixed contact points among four fixed contact points including fixed contact points (a, b) of a first relay (50) and fixed contact points (c, d) of a second relay (60).

## Description

### TECHNICAL FIELD

The present invention relates to an electric power steering apparatus.

### BACKGROUND ART

In an electric power steering apparatus, as described in Patent Document 1, there has been set out a structure which can control a steering wheel of a vehicle by driving an electric motor having three phase coil windings by a motor drive circuit. It is structured such as to assist steering operation by a driver by actuating in such a manner that the motor drive circuit drives the electric motor in correspondence to a result of detection at a time when an electronic circuit detects, for example, a torque and a steering angle of the steering wheel which the driver operates.

Further, in an electric power steering apparatus described in Patent Document 1, it has a fail safe function which can stop power steering actuation by an electric motor and can switch to a manual actuation by a driver, at a time when an electronic circuit detects a problem in the system of the electric motor and the motor drive circuit. The fail safe function is provided with a switch means in two phase coil windings of the electric motor. The switch means can be moved between a position at which two phase coil windings are closed or connected so as to circulate an electric current, and a position at which they are opened or disconnected so as to inhibit the electric current from circulating.

Accordingly, if the electric circuit detects the problem in the system mentioned above, the switch means is set to the disconnected position mentioned above, not only a power supply with respect to each of the phase coil windings of the electric motor is shut off, but also a current circuit by which the respective phase coil windings of the electric motor are connected to each other via a transistor or the like of the motor drive circuit is shut off. In accordance with this, even if the driver manually actuates the steering wheel so as to turn the electric motor after the problem in the system mentioned above is generated, an induced electromotive force is not generated in each of the phase coil windings of the electric motor, and a steering resistance is not applied to the driver.

### PRIOR ART DOCUMENT

### PATENT DOCUMENT

Patent Document 1 : Japanese Unexamined Patent Application (Translation of PCT Application) No. 2000-500102

### SUMMARY OF THE INVENTION

### PROBLEM TO BE SOLVED BY THE INVENTION

The switch means mentioned above has a first relay which is interposed in a first phase coil winding, and a second relay which is interposed in a second phase coil winding, in three phase coil windings of an electric motor. A movable contact point portion of the first relay and a movable contact point portion of the second relay are actuated by one electromagnetic operating portion. A pair of fixed contact points (a) and (b) of a fixed contact point portion which is attached to a housing of the first relay is connected and disconnected by the movable contact point portion of the first relay. A pair of fixed contact points (c) and (d) of a fixed contact point portion which is attached to a housing of the second relay can be connected and disconnected by the movable contact point portion of the second relay. When an electronic circuit detects the problem in the system mentioned above, it is possible to shut off a current circuit in which the respective phase coil windings of the electric motor are connected to each other via the transistor or the like of the motor drive circuit, by the first and second relays of the switch means.

However, in the switch means mentioned above, there is a case that the respective contact points of the fixed contact points (a) and (b) of the first relay and the fixed contact points (c) and (d) of the second relay run into an unexpected electric conduction caused by a foreign material such as a metal wire or the like mixed into the housing of the switch means. In the case mentioned above, regardless of whether or not the electronic circuit detects the problem in the system mentioned above, the current circuit in which the respective phase coil windings of the electric motor are directly connected by the foreign material such as the metal wire or the like is closed. The electric motor cannot be controlled by the electronic circuit or the motor drive circuit, and an induced electromotive force is generated in each of the phase coil windings of the electric motor at a time when the driver manually actuates the steering wheel so as to turn the electric motor, thereby applying a steering resistance to the driver.

An object of the present invention is to prevent each of fixed contact points of a switch means from forming an electrical continuity by a mixing of a foreign material, in an electric power steering apparatus having a switch means which opens or disconnects a phase coil winding of an electric motor in correspondence to a problem in a system.

### MEANS FOR SOLVING THE PROBLEM

In accordance with claim 1 of the present invention, there is provided an electric power steering apparatus comprising the electric power steering being capable of controlling a steering wheel of a vehicle by driving an electric motor having a plurality of phase coil windings by a motor drive circuit. A switch means is provided in at least first and second phase coil windings of the electric motor. The switch means has a first relay which is interposed in the first phase coil winding, and a second relay which is interposed in the second phase coil winding. A movable contact point portion of the first relay and a movable contact point portion of the second relay are actuated by one electromagnetic operation portion. A pair of fixed contact points (a, b) of a fixed contact point portion which is attached to a housing of the first relay is capable of being connected and disconnected by the movable contact point portion of the first relay. A pair of fixed contact points (c, d) of a fixed contact point portion which is attached to a housing of the second relay is capable of being connected and disconnected by a movable contact point portion of the second relay. A shutoff means which shuts off an extension of a foreign material which extends from one to another of at least two fixed contact points so as to allow an electrical continuity of the fixed contact points is provided between the at least two fixed contact points in four fixed contact points including the fixed contact points (a, b) of the first relay and the fixed contact points (c, d) of the second relay.

In accordance with claim 2 of the present invention, further in the invention in accordance with claim 1, wherein the movable contact point portion of the first relay and the movable contact point portion of the second relay are provided in both sides of a movable holder which is driven by one electromagnetic operation portion, and the shutoff means is provided in a housing with a fixed partition wall which zones areas in which the at least two fixed contact points are respectively installed, and a movable partition wall provided in the center of the movable holder is arranged in the vicinity of a side of the fixed partition wall, and in the vicinity of a side to which the movable partition wall is opposed in a direction which is orthogonal to a movable direction of the movable partition wall, via a fixed gap.

In accordance with claim 3 of the present invention, further in the invention in accordance with claim 1 or 2, wherein the shutoff means is provided between the fixed contact point (a) in the coil winding side of the first relay and the fixed contact point (c) in the coil winding side of the second relay.

In accordance with claim 4 of the present invention, further in the invention in accordance with any one of claims 1 to 3, wherein the shutoff means is provided between the fixed contact point (b) in the motor drive circuit side of the first relay and the fixed contact point (d) in the motor drive circuit side of the second relay.

In accordance with claim 5 of the present invention, there is provided an electric power steering apparatus comprising: the electric power steering being capable of controlling a steering wheel of a vehicle by driving an electric motor having a plurality of phase coil windings by a motor drive circuit; a switch means being provided in at least one phase coil winding of the electric motor; and the switch means being capable of connecting and disconnecting a pair of fixed contact points of a fixed contact point portion which is attached to a housing, by a movable contact point portion. The electric power steering apparatus is provided with a shutoff means which shuts off an extension of a foreign material which allows an electrical continuity of the fixed contact points.

### EFFECTS

### (Claims 1 and 6)

(a) In the electric power steering, the switch means has the first relay which is interposed in the first phase coil winding, and the second relay which is interposed in the second phase coil winding. The movable contact point portion of the first relay, and the movable contact point portion of the second relay are actuated by one electromagnetic operation portion. Connection and disconnection occurs between a pair of fixed contact points (a) and (b) of the fixed contact point portion which is attached to the housing of the first relay by the movable contact point portion of the first relay. Connection and disconnection occurs between a pair of fixed contact points (c) and (d) of the fixed contact point portion which is attached to the housing of the second relay, by the movable contact point portion of the second relay. The switch means is provided with the shutoff means which is located between at least two fixed contact points among four fixed contact points including the fixed contact points (a) and (b) of the first relay and the fixed contact points (c) and (d) of the second relay. The shutoff means which extends from one to another of the at least two fixed contact points and shuts off the extension of the foreign material which can form the electrical continuity of the fixed contact points. In accordance with this, it is possible to prevent each of the contact points including the fixed contact points (a) and (b) of the first relay and the fixed contact points (c) and (d) of the second relay from running into the formation of unexpected electrical continuity by foreign material such as a metal wire or the like which mixes into the housing of the switch means. Accordingly, it is possible to always stably control the electric motor by the electronic circuit and the motor drive circuit.

### (Claims 2, 7 and 8)

(b) The movable contact point portion of the first relay and the movable contact point portion of the second relay are provided in both sides of the movable holder which is driven by one electromagnetic operation portion. Further, the shutoff means is provided in the housing with the fixed partition wall which divides the areas in which the at least two fixed contact points are respectively installed from each other. The movable partition wall provided in the center of the movable holder is arranged in the vicinity of the side of the fixed partition wall, and in the vicinity of the side to which the movable partition wall is opposed in the orthogonal direction to the movable direction of the movable partition wall, via the fixed gap. Accordingly, the fixed partition wall and the movable partition wall which construct the shutoff means construct the labyrinth seal structure which shuts off the at least two areas mentioned above, in all the moving range in which the movable partition wall moves in correspondence to the movable stroke of the movable holder. In accordance with this, foreign material such as metal wire or the like which mixes into the housing of the switch means does not enter from one of the two areas mentioned above into another so as to extend, and it is possible to securely prevent the fixed contact points from unexpectedly forming electrical continuity.

### (Claim 3)

(c) The shutoff means is provided between the fixed contact point (a) in the coil winding side of the first relay and the fixed contact point (c) in the coil winding side of the second relay. Accordingly, the current circuit in which each of the coil windings of the electric motor is directly connected by the foreign material such as the metal wire or the like is not closed. In accordance with this, when the driver manually actuates the steering wheel so as to turn the electric motor, the induced electromotive force is generated in each of the phase coil windings of the electric motor, and it is possible to prevent an unnecessary steering resistance from being applied to the driver.

### (Claim 4)

(d) The shutoff means is provided between the fixed contact point (b) in the side of the motor drive circuit of the first relay and the fixed contact point (d) in the side of the motor drive circuit of the second relay. Accordingly, an erroneous actuation is not caused in the control of the electric motor by the electronic circuit and the motor drive circuit.

### (Claim 5)

(e) In the electric power steering apparatus in which the switch means is provided in at least one phase coil winding of the electric motor, the switch means can connect and disconnect a pair of fixed contact points of the fixed contact point portion which is attached to the housing, by the movable contact point portion. The switch means is provided with the shutoff means between a pair of fixed contact points. The shutoff means shuts off the extension of the foreign material which extends from one to another of two fixed contact points so as to allow the electrical continuity of the fixed contact points. In accordance with this, even in the case that the switch means is provided in one phase coil winding of the electric motor, it is possible to prevent each of the fixed contact points of the switch means from forming the electrical continuity by the mixing of the foreign material, and it is possible to always stably control the electrical motor by the electronic circuit and the motor drive circuit.

### BRIEF DESCRIPTION OF THE DRAWINGS

[FIG. 1] FIG. 1 is a circuit diagram showing a motor control circuit of an electric power steering apparatus.
[FIG. 2] FIG. 2 is a schematic cross sectional view showing a switch means.
[FIG. 3] FIG. 3 is a schematic cross sectional view along a line III-III in FIG. 2.
[FIG. 4] FIG. 4 is a schematic cross sectional view showing a shutoff means.
[FIG. 5] FIG. 5 is a schematic cross sectional view showing a modified example of the shutoff means.

### BEST MODE FOR CARRYING OUT THE INVENTION

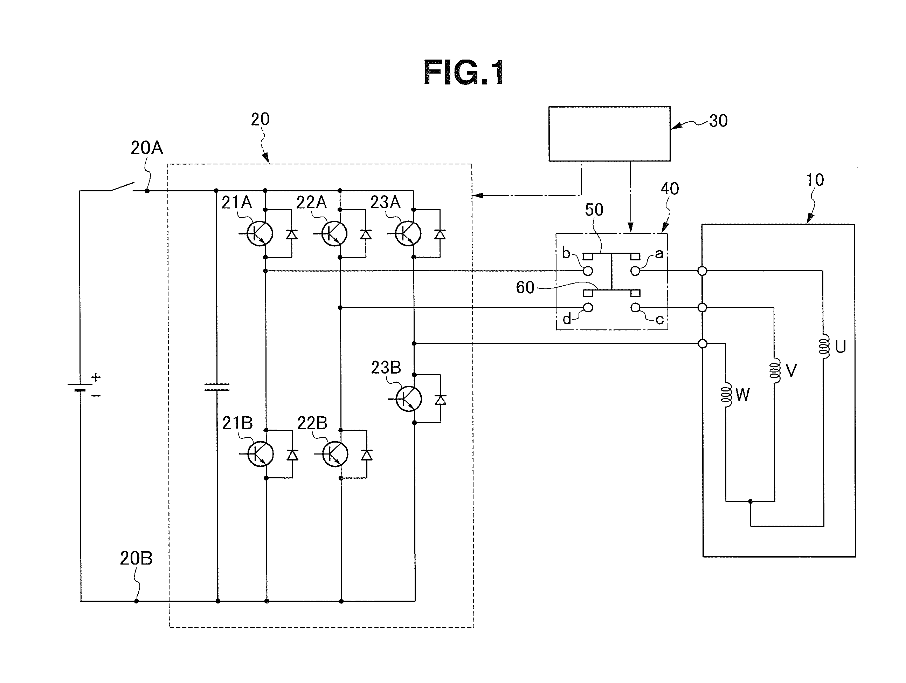

FIG. 1 shows a motor control circuit of an electric power steering apparatus. An electric motor 10 is connected to a steering system of a vehicle, and can control a steering wheel of the vehicle by being driven by actuation of a motor drive circuit 20. At this time, an electronic circuit 30 detects, for example, a torque and a steering angle of the steering wheel which a driver operates, and the motor drive circuit 20 is actuated in response to a result of detection thereof.

The electric motor 10 is a brushless motor having a plurality of, three in the present embodiment, phase coil windings U, V and W which are connected by star points.

The motor drive circuit 20 has three phases of bridge circuits. The motor drive circuit 20 is provided with transistors 21A, 22A and 23A which are connected between end portions of the respective phase of coil windings (U, V, W) of the motor and a power terminal 20A connected to an upstream side of the bridge circuit. The motor drive circuit 20 is provided with transistors 21B, 22B and 23B which are connected between the end portions of the respective phase of coil windings (U, V, W) of the motor and a ground terminal 20B. These transistors 21A to 23A and 21B to 23B are switching controlled by the electronic circuit 30 mentioned above so as to be excited or not to be excited.

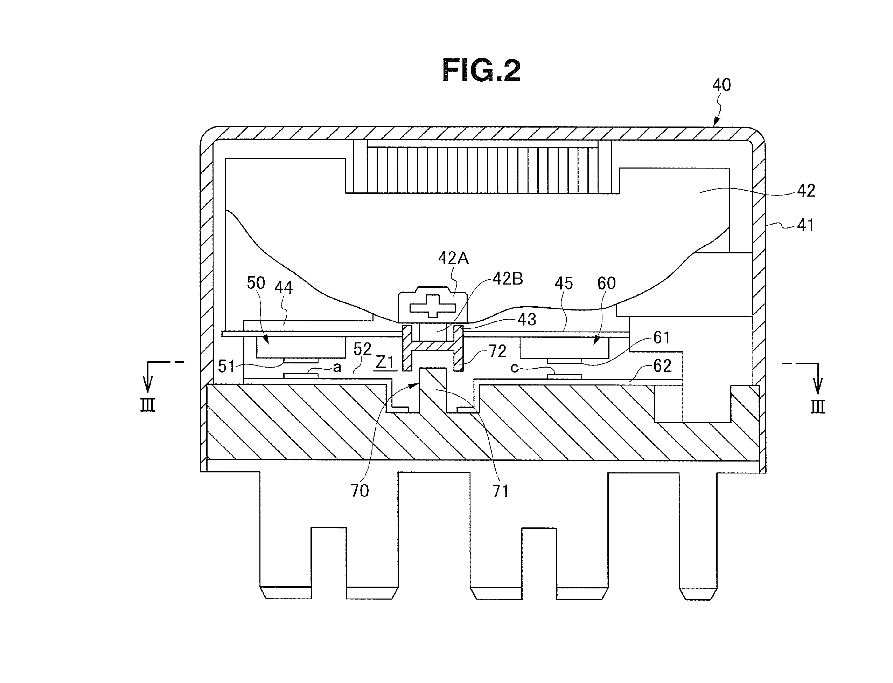

A switch means 40 is provided in at least two, i.e., first and second phase coil windings connecting the electric motor 10, that is, the first phase coil winding U and the second phase coil winding V in the present embodiment. The switch means 40 has a first relay 50 which is interposed in the first phase coil winding U, and a second relay 60 which is interposed in the second phase coil winding V, in an inner portion of a housing 41, as shown in FIG. 1 to FIG. 3.

The switch means 40 is provided by molding with metallic elongated rectangular conductive leaf springs 44 and 45 in both sides of a resin movable holder 43 which is moved up and down by a push element 42A of one electromagnetic operation portion 42. The leaf springs 44 and 45 respectively forms a movable contact point portion 51 of a first relay 50 and a movable contact point portion 61 of a second relay 60..

The switch means 40 is structured such that the electromagnetic operation portion 42 has a core and a coil, and a movable holder 43 is retained to the push element 42A which is driven by the electromagnetic operation portion 42 via a connection plate 42B. The switch means 40 is actuated so as to be turned on or off by the electronic circuit 30 at a time when the electronic circuit 30 detects a problem in a system of the electric motor 10 or the motor drive circuit 20. The push element 42A is driven on the basis of a suction force which is generated by applying an electric circuit to a coil of the electromagnetic operation portion 42. By using the push element 42A, the switch means 40 pushes down the movable holder 43 existing at an upper end position of a movable stroke in a free state, and further the leaf springs 44 and 45, to a lower end position of the movable stroke. By using the push element 42A, the switch means 40 moves down the movable contact point portion 51 of the first relay 50 and the movable contact point portion 61 of the second relay 60. A pair of fixed contact points (a) and (b) of the fixed contact point portion 52 is attached to the housing 41 of the first relay 50 and consists of a conductive bus bar of the phase coil winding U, and connected by the movable contact point portion 51 of the first relay 50, thereby turning on (conducting) the first relay 50. At the same time, a pair of fixed contact points (c) and (d) of the fixed contact point portion 62 is attached to the housing 41 of the second relay 60 and consists of a conductive bus bar of the phase coil winding V, and connected by the movable contact point portion 61 of the second relay 60, thereby turning on (conducting) the second relay 60.

Next, if the electronic circuit 30 turns off the switch means 40, and a current application to the coil of the electromagnetic operation portion 42 is disconnected, the movable holder 43 is pushed up by a return spring force. The movable contact point portion 51 of the first relay 50 and the movable contact point portion 61 of the second relay 60 move up. A pair of fixed contact points (a) and (b) of the fixed contact point portion 52 is disconnected, and a pair of fixed contact points (c) and (d) of the fixed contact point portion 62 are disconnected.

Accordingly, when the electronic circuit 30 detects the problem in the system mentioned above, not only the power supply with respect to each of the phase coil windings U and V of the electric motor 10 is shut off, but also the current circuit in which the respective phase coil windings U and V of the electric motor 10 are connected to each other via the transistors of the motor drive circuit 20 is shut off. In accordance with this, even in the case that the driver manually actuates the steering wheel so as to turn the electric motor 10 after the problem in the system mentioned above is generated, any induced electromotive force is not generated in each of the phase coil windings U and V of the electric motor 10, and an unnecessary steering resistance is not applied to the driver.

Accordingly, in order to prevent each of the fixed contact points (a) to (d) of the fixed contact point portions 52 and 62 of the first and second relays 50 and 60 from forming an electrical continuity by the mixing of the foreign material such as the metal wire or the like into the housing 41, the switch means 40 is provided with the following structures.

In other words, the switch means 40 is provided with a shutoff means 70 which shuts off an extension of a foreign material which extends from one to another of at least two fixed contact points and can form an electrical continuity of the fixed contact points, between the at least two fixed contact points among four fixed contact points including the fixed contact points (a) and (b) of the first relay 50 and the fixed contact points c and d of the second relay 60.

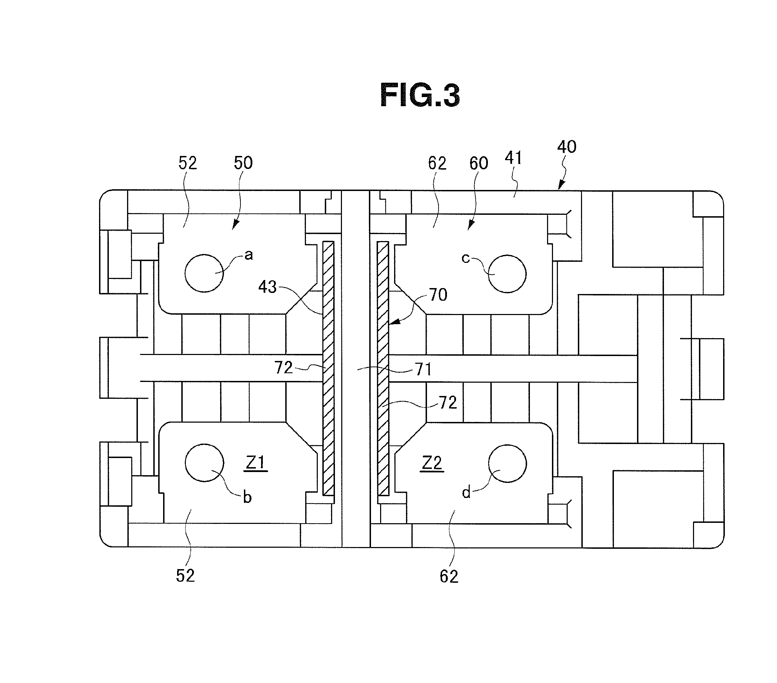

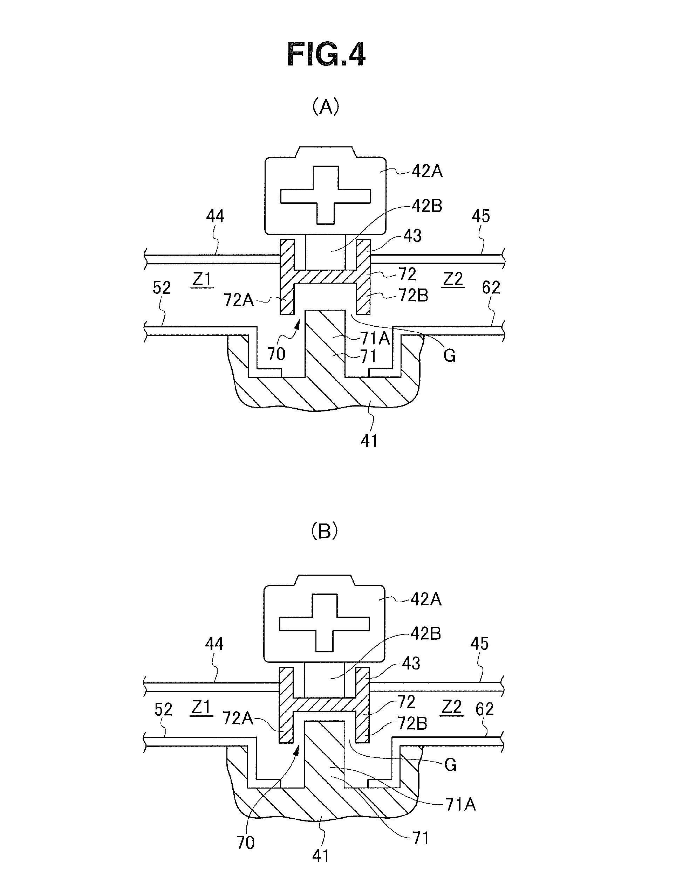

Specifically, the shutoff means 70 is provided between the fixed contact point (a) in the coil winding (U) side of the first relay 50 and the fixed contact point (c) in the coil winding (V) side of the second relay 60, and between the fixed contact point (b) in the motor drive circuit 20 side of the first relay 50 and the fixed contact point (d) in the motor drive circuit 20 side of the second relay 60, as shown in FIG. 3 and FIG. 4.

In the present embodiment, the housing 41 is provided in a rising manner with a fixed partition wall 71 which divides two areas of an area Z1 in which the fixed contact points (a) and (b) of the first relay 50 are installed within the housing 41, and an area Z2 in which the fixed contact points (c) and (d) of the second relay 60 are installed, from each other. A movable partition wall 72 is between the movable contact point portions 51 and 61 on the movable holder 43 and is provided in the center and is arranged in the vicinity of a side of the fixed partition wall 71, and in the vicinity of a side to which the movable partition wall 72 is opposed in a side which is orthogonal to a vertical direction in which the movable partition wall 72 can move, via a fixed gap G (a small gap).

The fixed partition wall 71 consists of a single resin projection rib 71A which is provided in a rising manner in a boundary portion between the area Z1 and the area Z2, just below the movable holder 43, within the resin housing 41. The projection rib 71A is integrally formed with the housing 41. The movable partition wall 72 is in parallel to the projection rib 71A mentioned above in a lower surface of the resin movable holder 43, and consists of two resin projection ribs 72A and 72B. Each of the two resin projection ribs 72A and 72B faces at each side of the both sides of the single projection rib 71A via the gap G mentioned above. The projection ribs 72A and 72B are integrally formed with the movable holder 43. When the movable holder 43 is at a position of an upper end of a movable stroke (FIG. 4(A)), lower ends of the projection ribs 72A and 72B are positioned at positions which are lower than the upper end of the projection rib 71A, and the movable partition wall 72 is opposed to the vicinity of the side of the fixed partition wall 71 via the fixed gap G, in the side of the fixed partition wall 71. When the movable holder 43 is at an upper end position (FIG. 4(A)) to a lower end position (FIG. 4(B)) of the movable stroke, the movable partition wall 72 does not come into contact with the fixed partition wall 71. The projection rib 71A relatively moves up and down within a concave groove which is between the fixed two projection ribs 72A and 72B. The fixed partition wall 71 and the movable partition wall 72 form a gap route which is formed as a fixed U-shaped form in a direction heading for the area Z2 from the area Z1 mentioned above, and a labyrinth seal structure is formed between the area Z1 and the area Z2.

In accordance with the present embodiment, the following operations and effects can be achieved.
(a) In the electric power steering the switch means 40 has the first relay 50 interposed in the first phase coil winding U, and the second relay 60 interposed in the second phase coil winding V. The movable contact point portion 51 of the first relay 50, and the movable contact point portion 61 of the second relay 60, are actuated by one electromagnetic operation portion 42. The movable contact point portion 51 of the first relay 50 can connect and disconnect between a pair of fixed contact points (a) and (b) of the fixed contact point portion 52 which is attached to the housing 41 of the first relay 50. The movable contact point portion 61 of the second relay 60 can connect and disconnect between a pair of fixed contact points (c) and (d) of the fixed contact point portion 62 which is attached to the housing 41 of the second relay 60. The switch means 40 is provided with the shutoff means 70 between at least two fixed contact points among four fixed contact points including the fixed contact points (a) and (b) of the first relay 50 and the fixed contact points (c) and (d)of the second relay 60. The shutoff means 70 extends from one to another of the at least two fixed contact points and shuts off the extension of foreign material which can form electrical continuity of the fixed contact points. In accordance with this, it is possible to prevent each of the contact points including the fixed contact points (a) and (b) of the first relay 50 and the fixed contact points (c) and (d) of the second relay 60 from running into the formation of unexpected electrical continuity by foreign material such as the metal wire or the like which mixes into the housing 41 of the switch means 40. Accordingly, it is possible to always stably control the electric motor 10 by the electronic circuit 30 and the motor drive circuit 20.
(b) The movable contact point portion 51 of the first relay 50 and the movable contact point portion 61 of the second relay 60 are provided in both sides of the movable holder 43 which is driven by one electromagnetic operation portion 42. Further, the shutoff means 70 is provided in the housing 41 with the fixed partition wall 71 which divides the areas Z1 and Z2 in which the at least two fixed contact points are respectively installed from each other. The movable partition wall 72 provided in the center of the movable holder 43 is arranged in the vicinity of the side of the fixed partition wall 71, and in the vicinity of the side to which the movable partition wall 72 is opposed in the orthogonal direction to the movable direction of the movable partition wall 72, via the fixed gap G. Accordingly, the fixed partition wall 71 and the movable partition wall 72 which construct the shutoff means 70 construct the labyrinth seal structure which shuts off the at least two areas Z1 and Z2 mentioned above, in all the moving range in which the movable partition wall 72 moves in correspondence to the movable stroke of the movable holder 43. In accordance with this, foreign material such as metal wire or the like which mixes into the housing 41 of the switch means 40 does not enter from one of the two areas Z1 and Z2 mentioned above into another so as to extend, and it is possible to securely prevent the fixed contact points from unexpectedly forming the electrical continuity.
(c) The shutoff means 70 is provided between the fixed contact point (a) in the coil winding U side of the first relay 50 and the fixed contact point (c) in the coil winding V side of the second relay 60. Accordingly, the current circuit in which each of the coil windings U and V of the electric motor 10 is directly connected by the foreign material such as metal wire or the like is not closed. In accordance with this, when the driver manually actuates the steering wheel so as to turn the electric motor 10, the induced electromotive force is generated in each of the phase coil windings of the electric motor 10, and it is possible to prevent an unnecessary steering resistance from being applied to the driver.
(d) The shutoff means 70 is provided between the fixed contact point (b) in the side of the motor drive circuit 20 of the first relay 50 and the fixed contact point (d) in the side of the motor drive circuit 20 of the second relay 60. Accordingly, an erroneous actuation is not caused in the control of the electric motor 10 by the electronic circuit 30 and the motor drive circuit 20.

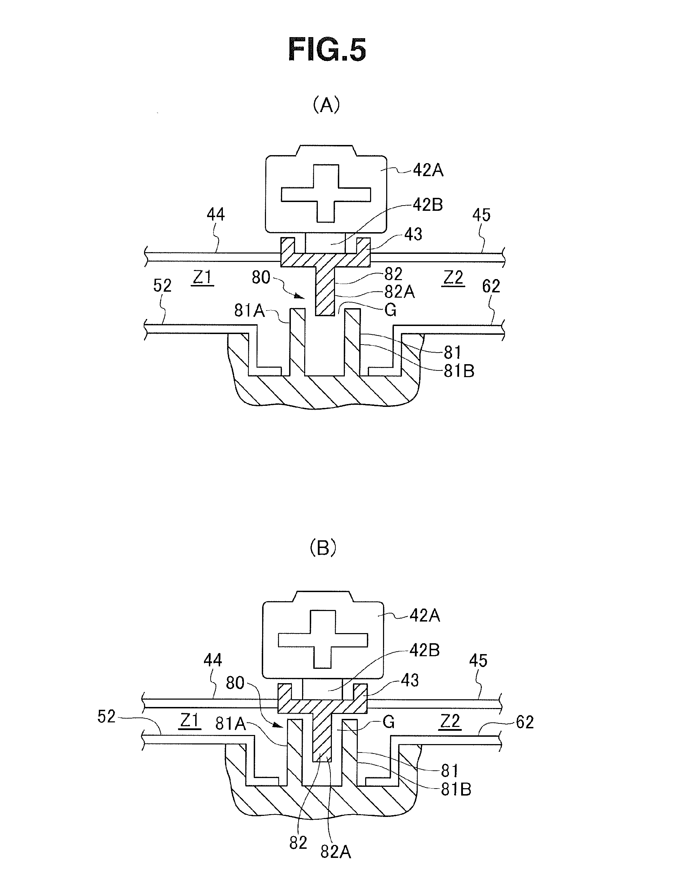

FIG. 5 shows a shutoff means 80 taking the place of the shutoff means 70. The shutoff means 80 is structured such that a fixed partition wall 81 taking the place of the fixed partition wall 71 of the shutoff means 70 is constructed by two projection ribs 81A and 81B which are provided in the housing 41. A movable partition wall 82 taking the place of the movable partition wall 72 of the shutoff means 70 is constructed by a single projection rib 82A which is provided in a lower surface of the movable holder 43. When the movable holder 43 is at an upper end position (FIG. 5(A) to a lower end position (FIG. 5(B)) of the movable stroke, the movable partition wall 82 does not come into contact with the fixed partition wall 81. The projection rib 82A moves up and down within a concave groove which are normally between two projection ribs 81A and 81B. The fixed partition wall 81 and the movable partition wall 82 form a gap route which is formed as a fixed U-shaped form in a direction of heading for the area Z2 from the area Z1 mentioned above, and the labyrinth seal structure is formed between the area Z1 and the area Z2.

In this case, the switch means 40 may be structured such as to form the fixed partition wall 71 and the movable partition wall 72 of the shutoff means 70 as a crisscross shape (or form the fixed partition wall 81 and the movable partition wall 82 of the shutoff means 80 as a crisscross shape). Four areas are divided including an area Z1a in which the fixed contact point (a) of the first relay 50 is installed, an area Z1b in which the fixed contact point (b) of the first relay 50 is installed, an area Z2c in which the fixed contact point (c) of the second relay 60 is installed, and an area Z2d in which the fixed contact point (d) of the second relay 60 is installed. The extension of foreign material which can form respective electrical continuity of these four fixed contact points (a) to (d) is shut off.

In the case that the shutoff means 70 (or the shutoff means 80) is provided, for example, between the fixed contact point (a) of the first relay 50 and the fixed contact point (d) of the second relay 60, it shuts off the extension of foreign material which can form electrical continuity between these two fixed contact points (a) and (d). In accordance with this, when the transistor 22B or 23B breaks down to be on, each of the coil windings U and W of the electric motor 10 does not close the diode which is connected in parallel to the transistor 23B or 22B, and the current circuit which is connected by the foreign material such as metal wire or the like between the fixed contact points (a) and (d). Accordingly, when the driver manually actuates the steering wheel so as to turn the electric motor 10, the induced electromotive force is generated in each of the phase coil windings of the electric motor 10, and it is possible to prevent the unnecessary steering resistance from being applied to the driver. Same applies to a case that the shutoff means 70 (or the shutoff means 80) is provided between the fixed contact point (b) of the first relay 50 and the fixed contact point (c) of the second relay 60.

Further, the present invention can control the steering wheel of the vehicle by driving the electric motor having a plurality of phase coil windings by the motor drive circuit. The electric power steering apparatus can be structured such that the switch means is provided in at least one phase coil winding of the electric motor. The switch means can connect and disconnect a pair of fixed contact points of the fixed contact point portion which is attached to the housing, by the movable contact point portion. The switch means is provided between a pair of fixed contact points with the shutoff means which extends from one of these two fixed contact points to another so as to shut off the extension of foreign material which can form the electrical continuity of the fixed contact points. In accordance with this, even in the case that the switch means is provided in one phase coil winding of the electric motor, it is possible to prevent each of the fixed contact points of the switch means from forming electrical continuity by the mixing of foreign material, and it is possible to always stably and easily control the electrical motor by the electronic circuit and the motor drive circuit.

The description is in detail given below of the embodiments in accordance with the present invention with reference to the accompanying drawings, however, the specific structure of the present invention is not limited to the embodiments, but a design change or the like in a range which does not deviate from the scope of the present invention is included in the present invention.

### INDUSTRIAL APPLICABILITY

The present invention relate to an electric power steering apparatus comprising., the electric power steering being capable of controlling a steering wheel of a vehicle by driving an electric motor having a plurality of phase coil windings by a motor drive circuit. A switch means is provided in at least first and second phase coil windings of the electric motor. The switch means has a first relay which is interposed in the first phase coil winding, and a second relay which is interposed in the second phase coil winding. A movable contact point portion of the first relay and a movable contact point portion of the second relay are actuated by one electromagnetic operation portion. A pair of fixed contact points (a, b) of a fixed contact point portion are attached to a housing of the first relay being capable of being connected and disconnected by the movable contact point portion of the first relay, and a pair of fixed contact points (c, d) of a fixed contact point portion which is attached to a housing of the second relay being capable of being connected and disconnected by a movable contact point portion of the second relay. A shutoff means which shuts off an extension of foreign material which extends from one to another of at least two fixed contact points so as to allow an electrical continuity of the fixed contact points is provided between the at least two fixed contact points in four fixed contact points including the fixed contact points (a, b) of the first relay and the fixed contact points (c, d) of the second relay. Accordingly, it is possible to prevent each of fixed contact points of a switch means from forming an electrical continuity by a mixing of foreign material, in an electric power steering apparatus having a switch means which opens a phase coil winding of an electric motor in correspondence to a problem in a system.

### EXPRANATIONS OF LETTERS OR NUMERALS

- 10: electric motor
- 20: motor drive circuit
- 40: switch means
- 41: housing
- 42: electromagnetic operation portion
- 43: resin movable holder
- 50: first relay
- 51: movable contact point portion
- 52: fixed contact point portion
- 60: second relay
- 61: movable contact point portion
- 62: fixed contact point portion
- 70, 80: shutoff means
- 71, 81: fixed partition wall
- 72, 82: movable partition wall
- U, V, W: phase coil windings
- a, b, c, d: fixed contact point

## Claims

1. An electric power steering apparatus comprising:
an electric power steering structure being capable of controlling a steering wheel of a vehicle by driving an electric motor having a plurality of phase coil windings by a motor drive circuit;
a switch means being provided in at least first and second phase coil windings of the electric motor;
the switch means having a first relay which is interposed in the first phase coil winding, and a second relay which is interposed in the second phase coil winding; and
a movable contact point portion of the first relay and a movable contact point portion of the second relay being actuated by one electromagnetic operation portion, a pair of fixed contact points (a, b) of a fixed contact point portion which is attached to a housing of the first relay being capable of being connected and disconnected by the movable contact point portion of the first relay, and a pair of fixed contact points (c, d) of a fixed contact point portion which is attached to a housing of the second relay being capable of being connected and disconnected by a movable contact point portion of the second relay,
wherein a shutoff means which shuts off an extension of a foreign material which extends from one to another of at least two fixed contact points so as to allow an electrical continuity of the fixed contact points is provided between the at least two fixed contact points in four fixed contact points including the fixed contact points (a, b) of the first relay and the fixed contact points (c, d) of the second relay.

2. The electric power steering apparatus according to claim 1, wherein the movable contact point portion of the first relay and the movable contact point portion of the second relay are provided in both sides of a movable holder which is driven by one electromagnetic operation portion, and
the shutoff means is provided in a housing with a fixed partition wall which zones areas in which the at least two fixed contact points are respectively installed, and a movable partition wall provided in the center of the movable holder is arranged in the vicinity of a side of the fixed partition wall, and in the vicinity of a side to which the movable partition wall is opposed in a direction which is orthogonal to a movable direction of the movable partition wall, via a fixed gap.

3. The electric power steering apparatus according to claim 1 or 2, wherein the shutoff means is provided between the fixed contact point (a) in the coil winding side of the first relay and the fixed contact point (c) in the coil winding side of the second relay.

4. The electric power steering apparatus according to any one of claims 1 to 3, wherein the shutoff means is provided between the fixed contact point (b) in the motor drive circuit side of the first relay and the fixed contact point (d) in the motor drive circuit side of the second relay.

5. An electric power steering apparatus comprising:
an electric power steering structure being capable of controlling a steering wheel of a vehicle by driving an electric motor having a plurality of phase coil windings by a motor drive circuit;
a switch means being provided in at least one phase coil winding of the electric motor; and
the switch means being capable of connecting and disconnecting a pair of fixed contact points of a fixed contact point portion which is attached to a housing, by a movable contact point portion.

6. The electric power steering apparatus according to claim 1, wherein the switch means is provided by molding with an elongated rectangular conductive leaf spring made of a metal in both sides of a resin movable holder which is moved up and down by a push element of one electromagnetic operation portion, and each of the movable contact point portion of the first relay and the movable contact point portion of the second relay is formed by each of the leaf springs.

7. The electric power steering apparatus according to claim 2, wherein the fixed partition wall is constructed by a single resin projection rib which is provided in a rising manner just below the movable holder within the housing, and is integrally formed with the housing, and
the movable partition wall is constructed by two resin projection ribs which are in parallel to the single projection rib in a lower surface of the movable holder, and each of the two resin projection ribs faces at each side of the both sides of the single projection rib via the gap.

8. The electric power steering apparatus according to claim 2, wherein the fixed partition wall is constructed by two resin projection ribs which are provided in a rising manner just below the movable holder within the housing, and are integrally formed with the housing, and
the movable wall is constructed by a single resin projection rib which is in parallel to the two projection ribs in a lower surface of the movable holder, and is provided via the gap within a concave groove which is between the two projection ribs.
